# EUROPEAN PATENT APPLICATION

(11) **EP 4 755 555 A1**
(43) Date of publication of application: **10.06.2026**
(21) Application number: 24891142.2
(22) Date of filing: 16.10.2024
(51) Int. Cl.: B23B 31/20, B23B 31/00, B23B 31/26, B23Q 17/00

(54) **MACHINE TOOL AND METHOD FOR CONTROLLING MACHINE TOOL**

(30) Priority: 13.11.2023 JP 2023192856
(71) Applicant: Citizen Machinery Co., Ltd., Nagano 389-0206 (JP)
(72) Inventor: AOYAGI, Atsushi, Kitasaku-gun, Nagano 389-0206 (JP)
(74) Representative: Ullrich & Naumann PartG mbB
(86) International application number: PCT/JP2024/036759
(87) International publication number: WO 2025/105100

(57) **Abstract**

A machine tool and a control method of the machine tool are provided, in which gripping of a workpiece by a collet chuck can be maintained even when the gripping force of the collet chuck on the workpiece is reduced due to wear of a bobbin, chuck jaws or the like.

A bobbin 160 has different outer diameters (an outer peripheral surface 161a and a large diameter outer peripheral surface 161b) along the axial direction of a spindle 110, and the machine tool comprises: a gripping state detecting section 181 that detects a gripping state of a collet chuck 140; and a drive controlling section 182 that controls a servo motor 150 to move the bobbin 160 forward and rearward based on a detection result from the gripping state detecting section 181 so that each of chuck jaws 170 comes into contact with a portion of the bobbin 160 having a predetermined outer diameter.

## Description

### [Technical Field]

The present invention relates to a machine tool having a collet chuck and a control method of the machine tool.

### [Background Art]

Conventionally, a machine tool is known, which comprises: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward, the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck (see, for example, Patent Literature 1).

### [Citation List]

### [Patent Literature]

[Patent Literature 1] JP 2019-123038 A

### [Summary of Invention]

### [Technical Problem]

Regarding the machine tool described in Patent Literature 1, there is a problem in that the gripping force of the collet chuck on the workpiece may be reduced due to wear of the bobbin, the chuck jaws or the like.

Therefore, the present invention solves the problem of the prior art as described above, and the object of the present invention is to provide a machine tool and a control method of the machine tool, in which gripping of a workpiece by a collet chuck can be maintained even when the gripping force of the collet chuck on the workpiece is reduced due to wear of a bobbin, chuck jaws or the like.

### [Solution to Problem]

The invention according to claim 1 is a machine tool comprising: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward, the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein the machine tool further comprises: a gripping state detecting section that detects a gripping state of the collet chuck; and a drive controlling section that controls the drive means to move the bobbin forward and rearward based on a detection result from the gripping state detecting section so that each of the chuck jaws comes into contact with a portion of the bobbin having a predetermined outer diameter. Thereby, the above-described problem is resolved.

The invention according to claim 2 is that, in addition to the configuration of the machine tool according to claim 1, the drive means is a motor, and the gripping state detecting section detects the gripping state based on a current value of the motor. Thereby, the above-described problem is further resolved.

The invention according to claim 3 is that, in addition to the configuration of the machine tool according to claim 1, the gripping state detecting section detects a position of one end of each of the chuck jaws in a direction intersecting the axial direction. Thereby, the above-described problem is further resolved.

The invention according to claim 4 is that, in addition to the configuration of the machine tool according to claim 1, the workpiece is sequentially and continuously supplied to the spindle by a material supplying device, and the gripping state detecting section detects a gripping state when gripping the workpiece during continuous machining of the workpiece. Thereby, the above-described problem is further resolved.

The invention according to claim 5 is that, in addition to the configuration of the machine tool according to any one of claims 1 to 4, the machine tool further comprises a notification means for notifying that gripping force of the collet chuck on the workpiece has been reduced. Thereby, the above-described problem is further resolved.

The invention according to claim 6 is a control method of a machine tool comprising: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward, the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein the control method comprising: a gripping state detecting step of detecting a gripping state of the collet chuck; and a bobbin position adjusting step of moving the bobbin forward and rearward by controlling the drive means based on a detection result in the gripping state detecting step so that each of the chuck jaws comes into contact with a portion of the bobbin having a predetermined outer diameter. Thereby, the above-described problem is resolved.

The invention according to claim 7 is that, in addition to the configuration of the control method of a machine tool according to claim 6, the control method further comprising: a workpiece supplying step in which a material supplying device supplies the workpiece to the spindle, wherein in the gripping state detecting step, a gripping state is detected when gripping the workpiece during continuous machining of the workpiece. Thereby, the above-described problem is further resolved.

### [Advantageous Effect of Invention]

According to the machine tool in the invention according to claim 1, the bobbin has different outer diameters along the axial direction of the spindle, and the machine tool further comprises: a gripping state detecting section that detects a gripping state of the collet chuck; and a drive controlling section that controls the drive means to move the bobbin forward and rearward based on a detection result from the gripping state detecting section so that each of the chuck jaws comes into contact with a portion of the bobbin having a predetermined outer diameter. Thereby, the reduced gripping force caused by wear of the bobbin or the chuck jaws can be easily detected to make it possible to adjust the opening degree of the collet of the collet chuck. Thus, even when the gripping force of the collet chuck on the workpiece is reduced due to wear of the bobbin, the chuck jaws or the like, gripping of the workpiece by the collet chuck can be maintained.

According to the machine tool in the invention according to claim 2, the drive means is a motor, and the gripping state detecting section detects the gripping state based on a current value of the motor. Thus, in addition to the effect of the machine tool in the invention according to claim 1, the gripping state detecting section can easily detect a gripping state of the collet chuck.

According to the machine tool in the invention according to claim 3, the gripping state detecting section detects a position of one end of each of the chuck jaws in a direction intersecting the axial direction. Thus, in addition to the effect of the machine tool in the invention according to claim 1, the gripping state detecting section can easily detect a gripping state of the collet chuck.

According to the machine tool in the invention according to claim 4, the workpiece is sequentially and continuously supplied to the spindle by a material supplying device, and the gripping state detecting section detects a gripping state when gripping the workpiece during continuous machining of the workpiece. Thereby, while machining of products is being continuously performed on the workpiece supplied to the spindle by the material supplying device, a gripping state can be detected and a closed state of the collet chuck can be maintained. Thus, in addition to the effect of the machine tool in the invention according to claim 1, it is possible to continuously perform normal machining of the workpiece for a long period of time.

According to the machine tool in the invention according to claim 5, the machine tool further comprises a notification means for notifying that gripping force of the collet chuck on the workpiece has been reduced. Thereby, managers of the machine tool can be aware of a partially closed state in which the workpiece cannot be sufficiently gripped due to occurrence of an abnormality in the chuck jaws or the like. Thus, in addition to the effect of the machine tool in the invention according to any one of claims 1 to 4, the partially closed state can be avoided and preparations for replacing the chuck jaws can be made while the collet chuck is in the closed state, and it is possible to shorten the time that the machine tool is stopped from operating in order to replace the chuck jaws.

According to the control method of a machine tool in the invention according to claim 6, the bobbin has different outer diameters along the axial direction of the spindle, and the control method comprises: a gripping state detecting step of detecting a gripping state of the collet chuck; and a bobbin position adjusting step of moving the bobbin forward and rearward by controlling the drive means based on a detection result in the gripping state detecting step so that each of the chuck jaws comes into contact with a portion of the bobbin having a predetermined outer diameter. Thereby, the reduced gripping force caused by wear of the bobbin or the chuck jaws can be easily detected to make it possible to adjust the opening degree of the collet of the collet chuck. Thus, even when the gripping force of the collet chuck on the workpiece is reduced due to wear of the bobbin, the chuck jaws or the like, gripping of the workpiece by the collet chuck can be maintained.

According to the control method of a machine tool in the invention according to claim 7, the control method further comprises: a workpiece supplying step in which a material supplying device supplies the workpiece to the spindle, wherein in the gripping state detecting step, a gripping state is detected when gripping the workpiece during continuous machining of the workpiece. Thereby, while machining of products is being continuously performed on the workpiece supplied to the spindle by the material supplying device, a gripping state can be detected and the closed state of the collet chuck can be maintained. Thus, it is possible to continuously perform normal machining of the workpiece for a long period of time.

### [Brief Description of Drawings]

Fig. 1 is a schematic diagram of a machine tool according to an example of the present invention.
Fig. 2 is an enlarged cross-sectional view of a main part of the machine tool shown in Fig. 1 with a collet chuck in an opened state.
Fig. 3 is a configuration diagram of an opening degree control device for the machine tool shown in Fig. 1.
Fig. 4 is a flowchart showing a procedure for maintaining the collet chuck in a closed state.
Fig. 5 is an enlarged cross-sectional view of a main part of the machine tool shown in Fig. 2 in a state where chuck jaws are in contact with the outer peripheral surface and the collet chuck is in the closed state.
Fig. 6 is an enlarged cross-sectional view of a main part of the machine tool showing a position of a chuck sleeve relative to the state of one end of each of the chuck jaws shown in Fig. 2.
Fig. 7 is a schematic diagram showing a change over time of the current value input to a servo motor.
Fig. 8 is an enlarged cross-sectional view of a main part of the machine tool shown in Fig. 1 in a state where the chuck jaws are in contact with the large diameter outer peripheral surface and the collet chuck is in the closed state.
Fig. 9 is an enlarged cross-sectional view of a main part of the machine tool showing a position of a bobbin relative to the state of one end of each of the chuck jaws shown in Fig. 2.

### [Description of Embodiments]

The specific embodiment of a machine tool in the present invention may be arbitrary as long as the machine tool comprises: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward, the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein the machine tool further comprises: a gripping state detecting section that detects a gripping state of the collet chuck; and a drive controlling section that controls the drive means to move the bobbin forward and rearward based on a detection result from the gripping state detecting section so that each of the chuck jaws comes into contact with a portion of the bobbin having a predetermined outer diameter, and even when the gripping force of the collet chuck on the workpiece is reduced due to wear of the bobbin, the chuck jaws or the like, gripping of the workpiece by the collet chuck can be maintained.

Alternatively, the specific embodiment of a control method of a machine tool in the present invention may be arbitrary as long as the machine tool comprises: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward, the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein the control method comprising: a gripping state detecting step of detecting a gripping state of the collet chuck; and a bobbin position adjusting step of moving the bobbin forward and rearward by controlling the drive means based on a detection result in the gripping state detecting step so that each of the chuck jaws comes into contact with a portion of the bobbin having a predetermined outer diameter, and even when the gripping force of the collet chuck on the workpiece is reduced due to wear of the bobbin, the chuck jaws or the like, gripping of the workpiece by the collet chuck can be maintained.

### [Example 1]

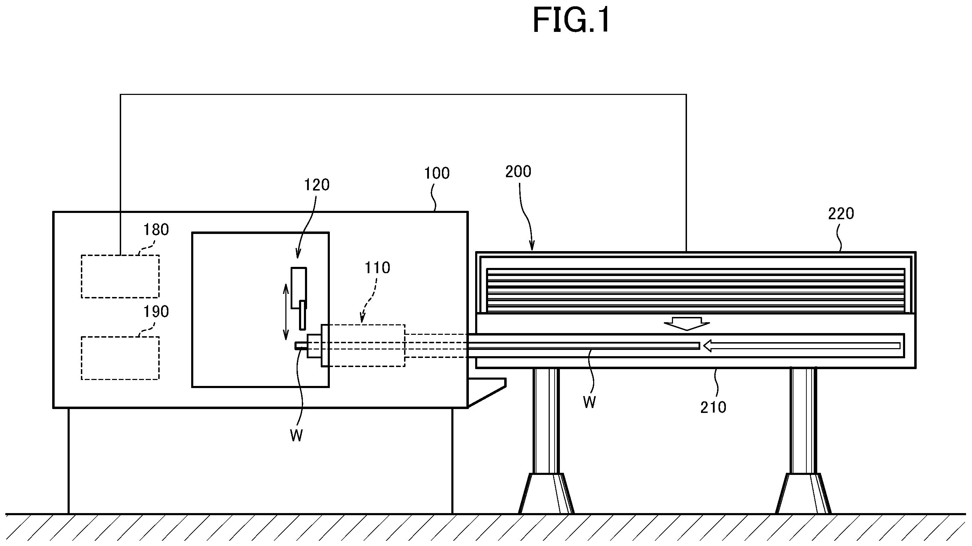

As shown in Fig. 1, an automatic lathe 100, which is a machine tool, is supplied with a long workpiece W by a material supplying device 200.

The automatic lathe 100 comprises a spindle 110 that grips the workpiece W supplied from the material supplying device 200, and a cutting tool 120 that performs machining to create a product from the workpiece W gripped by the spindle 110.

The material supplying device 200 includes a material feeding mechanism 210 that supplies the workpiece W to the spindle 110 of the automatic lathe 100, and a material supplying mechanism 220 that supplies the workpiece W to the material feeding mechanism 210.

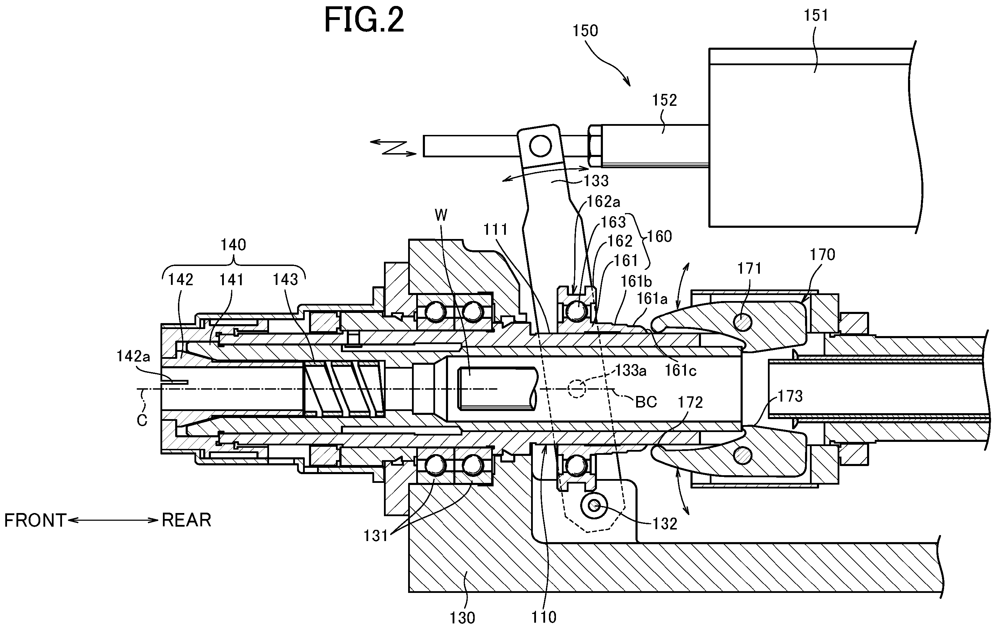

As shown in Fig. 2, the automatic lathe 100 includes a spindle headstock 130 that rotatably supports the spindle 110 via a bearing 131, and a collet chuck 140 that is attached to the spindle 110.

The collet chuck 140 is configured such that a cylindrical collet 142 is accommodated within a cylindrical chuck sleeve 141 that is inserted so as to be movable forward and rearward in the axial direction of the central axis C of the spindle 110, and a coil spring (elastic member) 143 is provided between the chuck sleeve 141 and the rear end of the collet 142.

The inner peripheral surface of the front end side of the chuck sleeve 141 is a tapered surface.

A plurality of slots 142a extending in the axial direction are formed in the circumferential direction on the front end side of the collet 142.

The outer peripheral surface of the front end side of the collet 142 is tapered to engage with the tapered surface of the chuck sleeve 141.

The front end surface of the collet 142 is positioned at the front end portion of the spindle 110.

Therefore, the opening degree of the collet 142 is adjusted by the forward and rearward movement of the chuck sleeve 141.

A servo motor 150 is provided on the spindle headstock 130 side.

The servo motor 150 is configured such that a servo motor main body 151 controls a piston rod 152 to protrude forward and rearward.

The piston rod 152 is attached to the tip of a lever 133 which is pivotally supported on a lever swing shaft 132 of the spindle headstock 130.

A bobbin 160 is externally fitted onto the spindle 110 so as to be movable forward and rearward in the axial direction relative to the spindle 110.

The bobbin 160 is composed of an annular inner ring 161 into which the spindle 110 is inserted, an annular outer ring 162 located outside the inner ring 161, and spherical rolling elements 163 arranged between the inner ring 161 and the outer ring 162.

As shown in Fig. 2, the inner ring 161 has an outer peripheral surface 161a of a predetermined diameter, which is approximately parallel to the central axis BC of the bobbin 160, a large diameter outer peripheral surface 161b, which is positioned forward of the outer peripheral surface 161a, is approximately parallel to the central axis BC, and has a larger diameter than the outer peripheral surface 161a, and an inclined outer peripheral surface 161c, which is positioned rearward of the outer peripheral surface 161a and has a diameter that gradually decreases toward the rear end side.

That is, the inner ring 161 has the outer peripheral surface 161a and the large diameter outer peripheral surface 161b, which have different outer diameters along the axial direction that is the direction of the central axis C of the spindle 110.

The outer ring 162 has an annular key groove 162a on the outer peripheral surface thereof.

The key groove 162a is engaged with a key 133a of the lever 133.

Therefore, the bobbin 160 moves forward and rearward in the axial direction of the central axis C of the spindle 110 via the lever 133 in response to the movement of the piston rod 152 of the servo motor 150 serving as a drive means for moving the bobbin 160 forward and rearward.

In a support body integrally attached to the spindle 110, chuck jaws 170, which move the chuck sleeve 141 and the collet 142 relative to one another to open and close the collet chuck 140, are supported by a swing shaft 171, which intersects the axial direction of the central axis C of the spindle 110, so as to be swingable toward the outer peripheral surface of the spindle 110.

Because the chuck sleeve 141 is pressed rearward by the coil spring 143, in the chuck jaws 170, one end 172 comes into contact with the inner ring 161 of the bobbin 160 or the outer peripheral surface 111 of the spindle 110 and another end 173 comes into contact with the rear end of the chuck sleeve 141 of the collet chuck 140 due to the biasing force of the coil spring 143.

As the one end 172 of each of the chuck jaws 170 swings in a direction away from the peripheral surface of the spindle 110, the another end 173 of each of the chuck jaws 170 presses the chuck sleeve 141 forward against the biasing force of the coil spring 143, and the chuck sleeve 141 of the collet chuck 140 moves forward relative to the collet 142.

As a result, the opening degree of the collet 142 becomes smaller, and the collet chuck 140 becomes in a closed state in which the collet chuck 140 grips the workpiece W.

When the swing of the chuck jaws 170 is released from the closed state of the collet chuck 140, due to the biasing force of the coil spring 143, the chuck sleeve 141 moves rearward relative to the collet 142 while the another end 173 of each of the chuck jaws 170 is in contact with and follow the chuck sleeve 141.

As a result, the opening degree of the collet 142 becomes larger, the one end 172 of each of the chuck jaws 170 comes into contact with the outer peripheral surface 111 of the spindle 110, and the collet chuck 140 is in an opened state in which the workpiece W is released.

As shown in Fig. 1, the automatic lathe 100 comprises a control device 180 that controls opening and closing of the collet chuck 140 and also controls driving of the material supplying device 200, and a notification means 190 that is configured to provide notification with sound, light, or message display on the display of the automatic lathe 100 or the like.

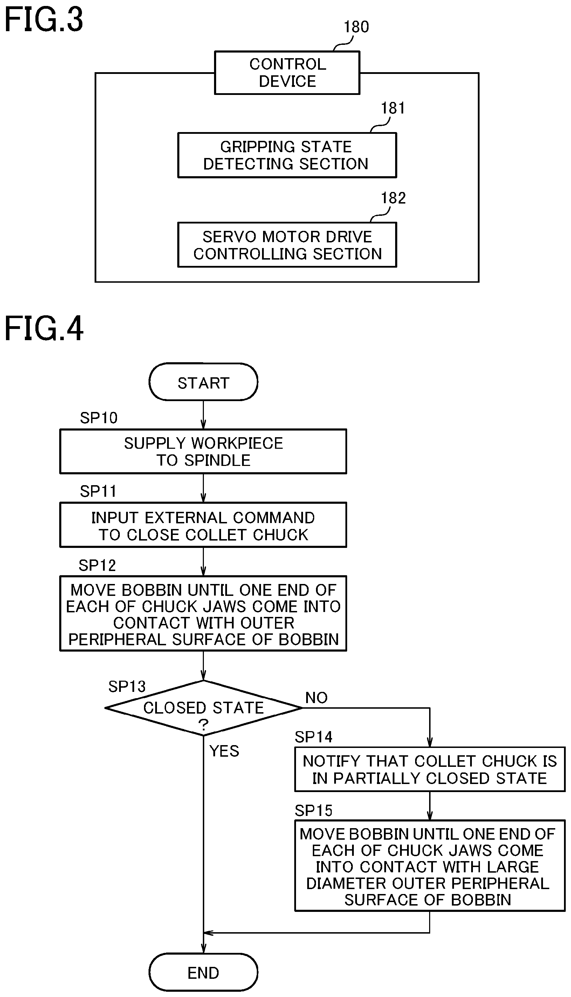

As shown in Fig. 3, the control device 180 has a gripping state detecting section 181 that detects a gripping state of the collet chuck 140, and a servo motor drive controlling section 182 that serves as a drive controlling section that controls the servo motor 150.

Next, gripping of the workpiece W during continuous machining of the workpiece W by the automatic lathe 100 configured as described above will be described.

When the control device 180 controls the material supplying device 200 to supply the long bar-shaped workpiece W from the rear end of the spindle 110 by the material supplying device 200, the workpiece W is inserted into the collet chuck 140 in the opened state and protrudes by a predetermined length from the tip of the spindle 110 (step SP10; workpiece supplying step).

In this state, as shown in Fig. 4, an external command to bring the collet chuck 140 into the closed position is input to the control device 180 (step SP11).

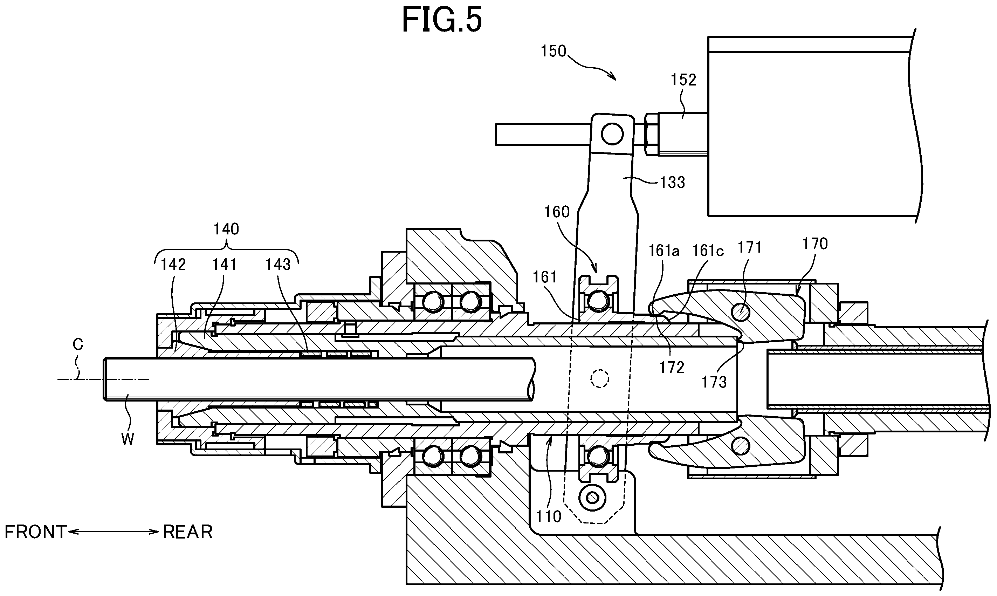

When the external command is input to the control device 180, the control device 180 drives the servo motor 150 via the servo motor drive controlling section 182, and moves the bobbin 160 rearward using the piston rod 152 until the one end 172 of each of the chuck jaws 170 comes into contact with the outer peripheral surface 161a of the inner ring 161 of the bobbin 160, as shown in Fig. 5 (step SP12).

At this time, the bobbin 160 is smoothly inserted between the spindle 110 and the chuck jaws 170 via the inclined outer peripheral surface 161c.

After performing step SP12, the gripping state detecting section 181 of the control device 180 detects a peak current value Ip of the servo motor main body 151 when the one end 172 of each of the chuck jaws 170 moves from the outer peripheral surface 111 of the spindle 110 onto the outer peripheral surface 161a of the bobbin 160 as a current value of the servo motor 150, and determines the gripping state of the workpiece W by the collet chuck 140 (step SP13; gripping state detecting step).

If the gripping state detecting section 181 determines that the peak current value Ip of the servo motor 150 is equal to a predetermined peak current value (YES in step SP13), the collet chuck 140 is determined to be in the closed state and in a state where the collet chuck 140 grips the workpiece W, and the control device 180 drives the spindle 110 to rotate relative to the spindle headstock 130 and the outer ring 162 of the bobbin 160, thereby starting machining of the workpiece W.

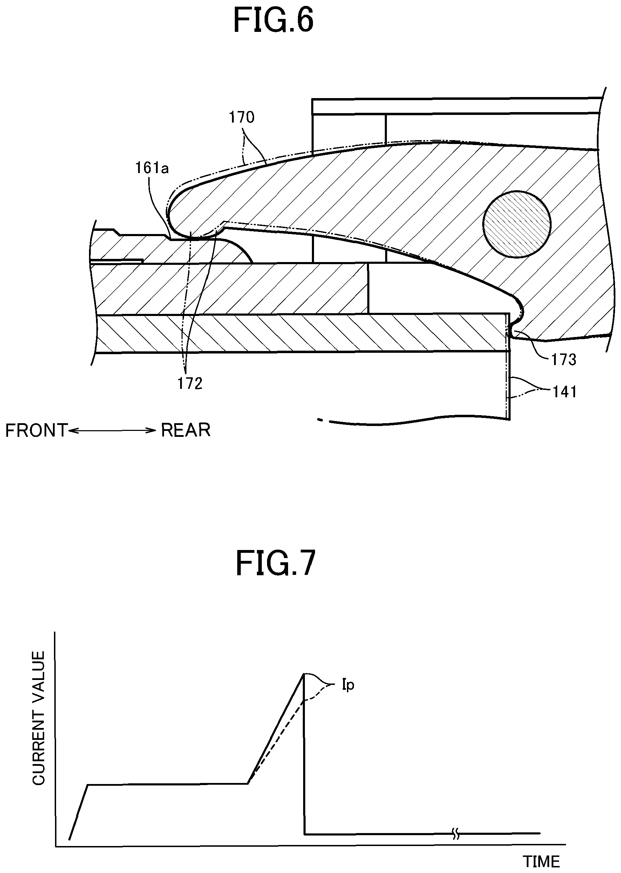

Here, for example, as shown in Fig. 6, when the chuck jaws 170 or the bobbin 160 are worn (solid line), and the one end 172 of each of the chuck jaws 170 comes into contact with the outer peripheral surface 161a of the bobbin 160, compared to when no wear has occurred (dash-dot line), the peak current value Ip decreases as shown in Fig. 7 (dotted line) when the one end 172 of each of the chuck jaws 170 approaches the central axis BC of the bobbin 160.

Therefore, when the gripping state detecting section 181 determines that the peak current value Ip of the servo motor 150 has decreased below the predetermined peak current value, the gripping force of the collet chuck 140 on the workpiece W has been reduced, and the collet chuck 140 is in a partially closed state (NO in step SP13), the notification means 190 notifies the partially closed state (step SP14).

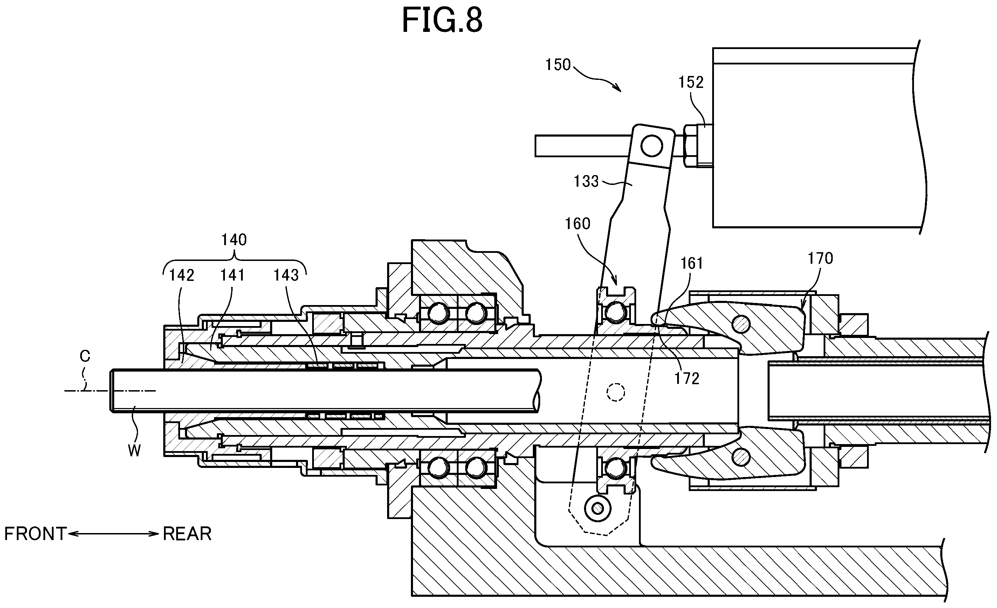

Then, the servo motor drive controlling section 182 drives the servo motor 150, and the bobbin 160 is moved rearward by the piston rod 152 so that the one end 172 of each of the chuck jaws 170 comes into contact with the large diameter outer peripheral surface 161b of the bobbin 160, as shown in Fig. 8 (step SP15: bobbin position adjusting step).

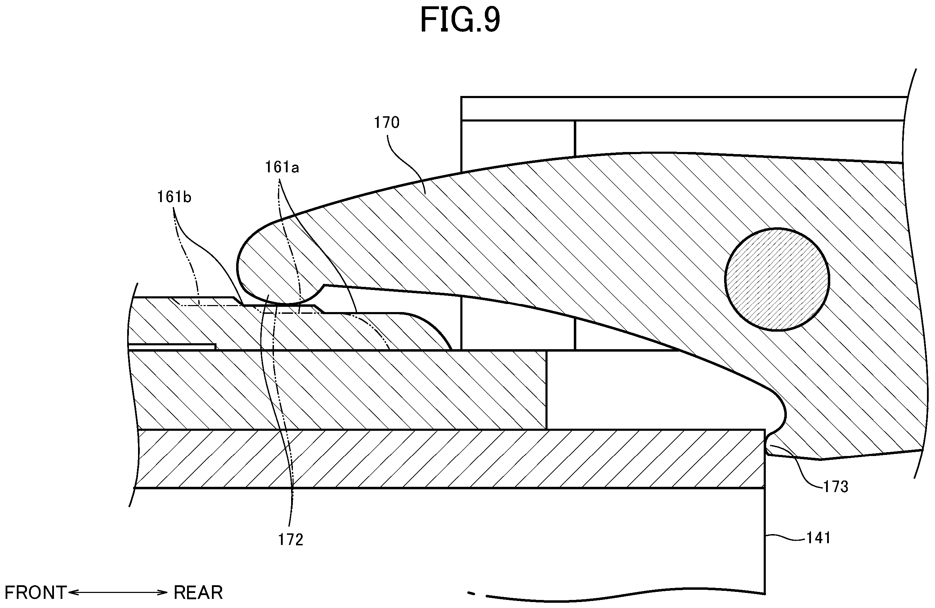

As a result, the same pressing amount as that in the state where the one end 172 of each of the chuck jaws 170 is in contact with the outer peripheral surface 161a of the bobbin 160 (dotted line) can be secured as shown in Fig. 9, thereby maintaining the collet chuck 140 in the closed state and allowing machining of the workpiece W to continue.

That is, the servo motor drive controlling section 182 controls the servo motor 150 to move the bobbin 160 forward and rearward based on the detection result from the gripping state detecting section 181 so that each of the chuck jaws 170 comes into contact with a portion of the bobbin 160 having a predetermined outer diameter.

With the machine tool consisting of the automatic lathe 100 and the control method for the machine tool in the present invention described above, the gripping state detecting section 181 can easily detect a state in which the workpiece W cannot be sufficiently gripped due to the reduced gripping force caused by wear of the chuck jaws 170 or the bobbin 160, thereby making it possible to adjust the opening degree of the collet 142 of the collet chuck 140. Thus, even when the above-mentioned wear or the like occurs, gripping of the workpiece W by the collet chuck 140 can be maintained.

The bobbin 160 serves as a deep groove ball bearing due to the rolling elements 163, and when the one end 172 of each of the chuck jaws 170 comes into contact with the inner ring 161 of the bobbin 160, the force applied to the inner ring 161 of the bobbin 160 acts in the radial direction of the bobbin 160 rather than in the thrust direction of the bobbin 160, making it less likely for uneven wear to occur on the bobbin 160 and preventing the collet chuck 140 from poorly gripping the workpiece due to wear between the chuck jaws 170 and the bobbin 160.

The gripping state detecting section 181 of the control device 180 can easily detect the gripping state of the collet chuck 140 with a simple structure by detecting a current value of the servo motor 150, such as the peak current value Ip.

While machining of products is being continuously performed on the workpiece W supplied to the spindle 110 by the material suppling device 200, the gripping state detecting section 181 detects the gripping state of the collet chuck 140 when gripping the workpiece W, thereby making it possible to continuously perform normal machining of the workpiece W for a long period of time without temporarily stopping the machining of the workpiece W to adjust the gripping force.

By providing the notification means 190, managers of the automatic lathe 100 can be aware of a reduction in the gripping force of the collet chuck 140, so that preparations for replacing the chuck jaws 170 can be made while the collet chuck 140 is in the closed state where the one end 172 of each of the chuck jaws 170 is in contact with the large diameter outer peripheral surface 161b of the bobbin 160, thereby shortening the time that the automatic lathe 100 is stopped from operating in order to replace the chuck jaws 170.

The outer peripheral surface of the bobbin 160 may have three or more steps, or may have a continuous inclined surface with an outer diameter that varies in distance from the central axis BC.

The gripping state detecting section 181 of the control device 180 may also be configured to detect a position of the one end 172 of each of the chuck jaws 170 in a direction intersecting the axial direction, for example, a position in a direction perpendicular to the central axis BC of the bobbin 160, using a sensor or the like.

### [Reference Signs List]

- 100: automatic lathe
- 110: spindle
- 111: outer peripheral surface
- 120: cutting tool
- 130: spindle headstock
- 131: bearing
- 132: lever swing shaft
- 133: lever
- 133a: key
- 140: collet chuck
- 141: chuck sleeve
- 142: collet
- 142a: slot
- 143: coil spring (elastic member)
- 150: servo motor (drive means)
- 151: servo motor main body
- 152: piston rod
- 160: bobbin
- 161: inner ring
- 161a: outer peripheral surface
- 161b: large diameter outer peripheral surface
- 161c: inclined outer peripheral surface
- 162: outer ring
- 162a: key groove
- 163: rolling element
- 170: chuck jaws
- 171: swing shaft
- 172: one end
- 173: another end
- 180: control device
- 181: gripping state detecting section
- 182: servo motor drive controlling section (drive controlling section)
- 190: notification means

- 200: material supplying device
- 210: material feeding mechanism
- 220: material supplying mechanism

- W: workpiece
- C: central axis of spindle
- BC: central axis of deep groove ball bearing

- Ip: peak current value

## Claims

1. A machine tool comprising: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward,
the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein
the machine tool further comprises: a gripping state detecting section that detects a gripping state of the collet chuck; and a drive controlling section that controls the drive means to move the bobbin forward and rearward based on a detection result from the gripping state detecting section so that each of the chuck jaws comes into contact with a portion of the bobbin having a predetermined outer diameter.

2. The machine tool according to claim 1, wherein the drive means is a motor, and the gripping state detecting section detects the gripping state based on a current value of the motor.

3. The machine tool according to claim 1, wherein the gripping state detecting section detects a position of one end of each of the chuck jaws in a direction intersecting the axial direction.

4. The machine tool according to claim 1, wherein the workpiece is sequentially and continuously supplied to the spindle by a material supplying device, and the gripping state detecting section detects a gripping state when gripping the workpiece during continuous machining of the workpiece.

5. The machine tool according to any one of claims 1 to 4, further comprising a notification means for notifying that gripping force of the collet chuck on the workpiece has been reduced.

6. A control method of a machine tool comprising: a collet chuck having a chuck sleeve that accommodates a collet; chuck jaws that move the chuck sleeve and the collet relative to one another to open and close the collet chuck; a spindle to which the collet chuck is attached; a bobbin externally fitted onto the spindle so as to be movable forward and rearward; and a drive means for moving the bobbin forward and rearward,
the bobbin having different outer diameters along the axial direction of the spindle, the chuck jaws being supported so as to be swingable toward an outer peripheral surface of the spindle, the bobbin being inserted between one end side of each of the chuck jaws and the spindle, thereby a workpiece is gripped by controlling opening and closing of the collet chuck, and an opening degree of the chuck jaws being adjusted in accordance with an outer diameter of the bobbin that comes into contact with the chuck jaws, thereby adjusting a gripping force of the collet chuck on the workpiece, wherein the control method comprising:
a gripping state detecting step of detecting a gripping state of the collet chuck; and
a bobbin position adjusting step of moving the bobbin forward and rearward by controlling the drive means based on a detection result in the gripping state detecting step so that each of the chuck jaws comes into contact with a portion of the bobbin having a predetermined outer diameter.

7. The control method of a machine tool according to claim 6, further comprising: a workpiece supplying step in which a material supplying device supplies the workpiece to the spindle, wherein
in the gripping state detecting step, a gripping state is detected when gripping the workpiece during continuous machining of the workpiece.
